# EUROPEAN PATENT APPLICATION

(11) **EP 4 299 455 A1**
(43) Date of publication of application: **03.01.2024**
(21) Application number: 23176613.0
(22) Date of filing: 01.06.2023
(51) Int. Cl.: B65B 35/44, B65B 63/02, B65G 19/26

(54) **CAM FEEDER FOR TRANSPORTING AND COMPACTING DOSES OF LONG PASTA**

(30) Priority: 08.06.2022 IT 202200012122
(71) Applicant: CYBORGLINE SA, 6902 Paradiso - Lugano (CH)
(72) Inventor: VEZZANI, Giuseppe, 6900 Paradiso - Lugano (CH)
(74) Representative: Mittler, Andrea

(57) **Abstract**

A blade feeder (1) is described, suitable for transporting and compacting doses of long pasta (7) in a packaging machine after dosing performed by a dosing machine of long pasta (7) which is placed after a production line of the long pasta (7), following a conveyor adapted to direct the long pasta (7) inside the dosing machine, to be dosed and discharged into the feeder (1). The feeder (1) comprises a frame (2), a motor (3), a plurality of carriers (5) adapted to slide along at least one track (41-43) of the feeder (1) adapted to draw a closed path, and transmission means (6, 8, 61) driven by the motor (3) and adapted to move the carriers (5). Each carrier (5) comprises a pusher (51) having a blade (511) adapted to push a dose of long pasta (7). The feeder (1) further comprises a cam assembly (4). (Fig.1).

## Description

The present invention relates to a cam feeder for transporting and compacting doses of long pasta, in particular from a dosing machine of long pasta.

Dosing machines of long pasta placed after a production line of long pasta, following a conveyor adapted to direct the pasta therein to be dosed and discharged into a feeding trough suitable for transporting the dosed long pasta into a packaging machine, are known.

Feeding trough, or simply feeder, means a conveying trough provided with means adapted to move the dose of pasta, for example, a conveyor belt or pushing blades which move the pasta along a sliding plane. The feeder enables the dose of pasta to be moved in a defined direction.

Preferably, the doses of long pasta fall into the feeder at compartments comprised between two pushing blades which are at a fixed distance.

Obviously, the length of the compartment between two blades is greater than the length of the long pasta so as to allow for an easy discharging without breaking the long pasta.

The need is there to compact the doses of long pasta before they reach the packaging machine.

Rotary compacting devices are known which are independent of the straight conveying means adapted to move the doses of pasta.

For example US-5816025 describes a blade feeder in which the blades are at a fixed distance and the compacting of the doses of long pasta is done by an independent rotary device which includes blades. While the blades of the feeder move according to a straight trajectory in the conveying direction of the doses of long pasta, at least one blade of the rotary device enters the compartment comprised between two blades of the feeder and pushes the dose of pasta towards the rear blade so as to compact the dose of pasta.

Alternatively, US-3932983 describes an independent compacting device comprising an L-shaped profile adapted to enter the compartment comprised between two blades of the feeder. Also this solution includes the pushing of the dose of pasta towards the rear blade. The L-shaped profile enters said compartment through a curved trajectory in which the compacting begins; it continues compacting following the same straight trajectory of the feeder; and then it exits the compartment with a new curved trajectory.

Disadvantageously, both known solutions require an independent device, i.e., dedicated movement means including suitably sized motors.

Furthermore, the rotary device described in US-5816025 is complicated to synchronize with the feeder that moves the doses of pasta in a straight direction.

In addition, it is noted that the device described in US-3932983 is not suitable for functioning in combination with a feeder in which the doses of pasta are discharged during the straight motion of the blades, since the compacting must necessarily start with the dose of pasta in the feeder while it moves according to a curved trajectory approaching the L-shaped profile.

It is the object of the present invention to provide a blade feeder for transporting doses of long pasta which comprises means for compacting the doses of long pasta.

It is a further object of the present invention that the compacting means include movement means integrated in the feeder.

It is a still further object of the present invention that the compacting means do not complicate the structure of the blade feeder.

According to the invention, said and further objects are achieved by a blade feeder as defined in claim 1.

Advantageously, with a single motor it is possible to both push the dose of long pasta out of the feeder and compact the dose of long pasta while it is still in the feeder.

The first and the second track allow the straight motion of the pushers, while the third track allows the movement of the plates of the control means with respect to the pushers.

The feeder is compact, made up of easily assembled and replaceable components, and adapts to different dosing machines.

These and other features of the present invention will become more apparent from the following detailed description of practical embodiments thereof shown by way of non-limiting examples in the accompanying drawings, in which:
Figure 1 shows a front view of a cam feeder according to the present invention;
Figure 2 shows a side view of the cam feeder;
Figure 3 shows a top plan view of the cam feeder;
Figure 4 shows a front view of a cam assembly of the feeder;
Figure 5 shows a rear view of the feeder, partially sectioned along a vertical plane;
Figure 6 shows a partially sectioned front view of a pusher of the feeder;
Figure 7 shows a rear view of the pusher;
Figure 8 shows a partially sectioned top plan view of the pusher;
Figure 9 shows a rear view of a control means of the pusher;
Figure 10 shows a front view of the control means;
Figure 11 shows a top plan view of the control means;
Figure 12 shows a sectional view along line XII-XII of Figure 9.

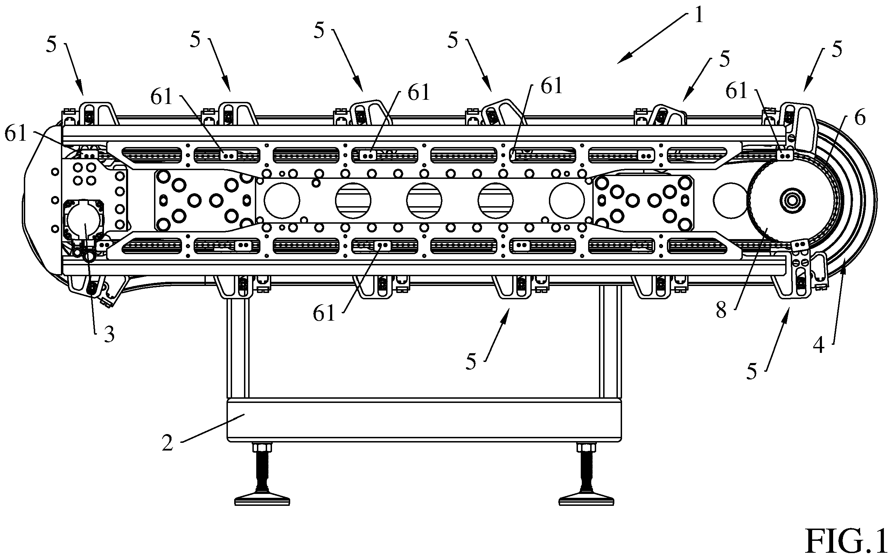

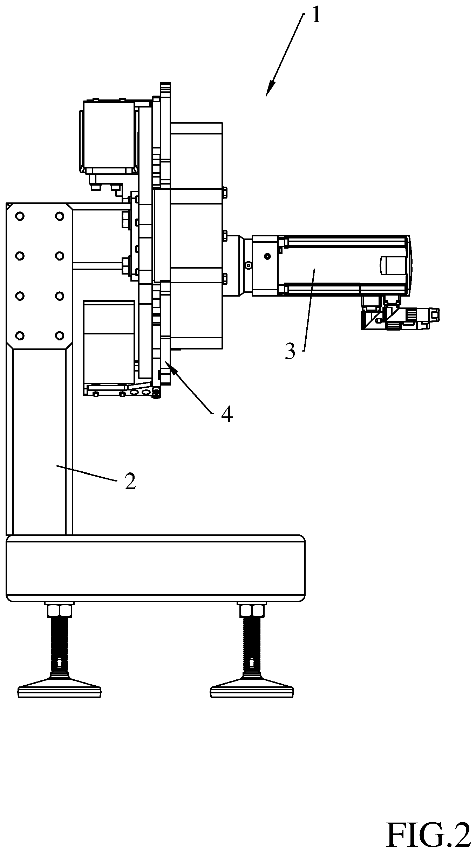

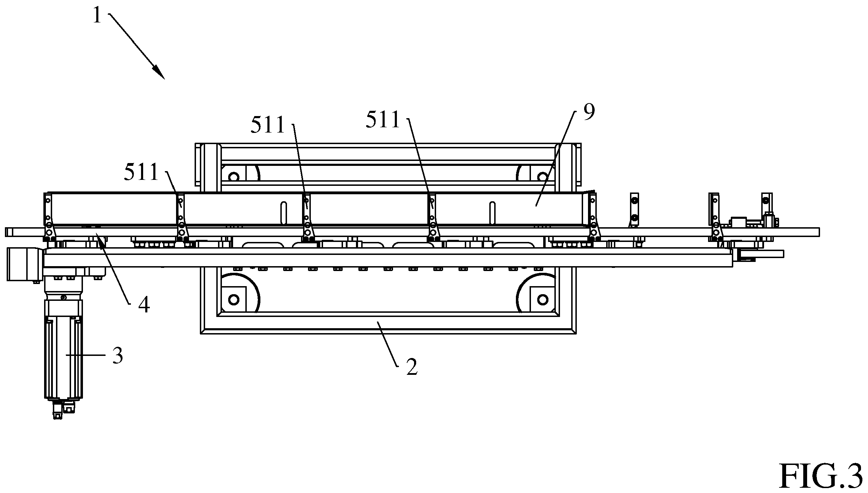

A blade feeder 1, or simply feeder 1 hereinafter, for convenience, comprises a frame 2, a motor 3 and a cam assembly 4. The frame 2 is adapted to support both the motor 3 and the cam assembly 4 (Figures 1-3).

The feeder 1 is suitable for transporting and compacting doses of long pasta 7 in a packaging machine after dosing performed by known dosing machines of long pasta that are placed after a production line of long pasta, following a conveyor adapted to direct the long pasta therein, to be dosed and discharged into the feeder 1.

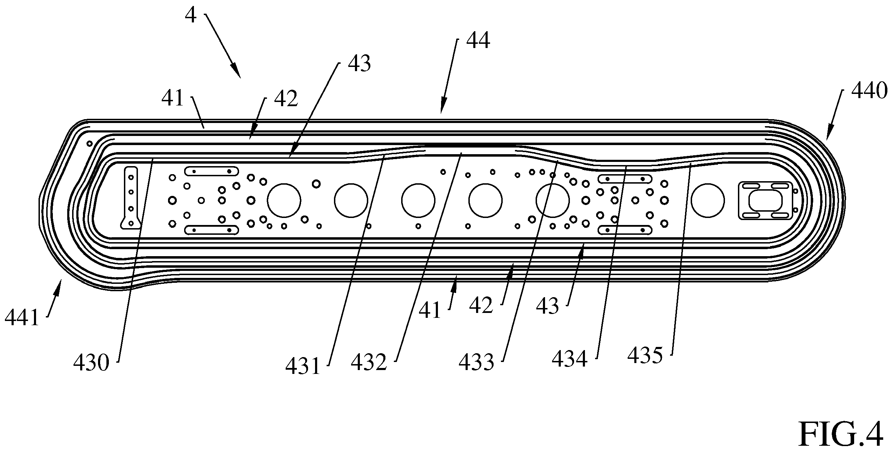

The cam assembly 4 comprises a first track 41, a second track 42 and a third track 43 adapted to trace three different closed paths (Figure 4).

The feeder 1 further comprises a plurality of carriers 5 adapted to slide along the tracks 41-43.

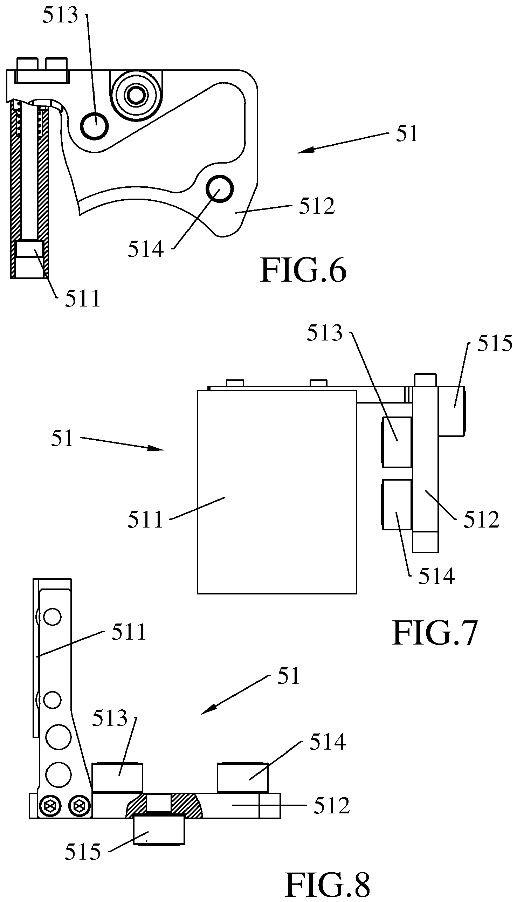

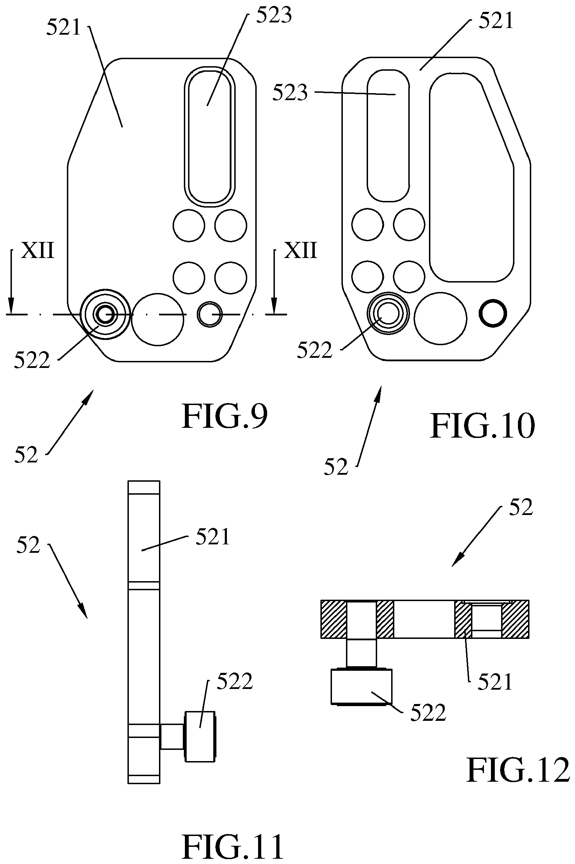

Each carrier 5 comprises a pusher 51 (Figures 6-8) and control means 52 (Figures 9-12) which are movable with respect to the pusher 51 as it will become clearer below.

The pusher 51 comprises a blade 511, a plate 512, a first roller 513 and a second roller 514.

The rollers 513, 514 are rotatably fixed to the plate 512 by means of pins protruding orthogonally from the plate 512.

The blade 511 is integral with the plate 512 by means of fixing arms.

The blade 511 and the plate 512 are oriented orthogonally to each other.

The first roller 513 is adapted to slide in the first track 41, while the second roller 514 is adapted to slide in the second track 42.

The control means 52 comprise a plate 521 and a third roller 522 rotatably fixed to the plate 521 by means of a pin protruding orthogonally from the plate 521. The third roller 522 is adapted to slide in the third track 43.

The plate 521 comprises a guide seat 523 along which a fourth roller 515 of the pusher 51 rotatably fixed to the plate 512 by means of a pin protruding orthogonally from the plate 512, is adapted to slide.

The feeder 1 further comprises a chain 6 (Figure 1) driven by the motor 3 by means of rotors 8.

The chain 6 comprises attachments 61 rotatably fixed to respective plates 521 of the control means 52.

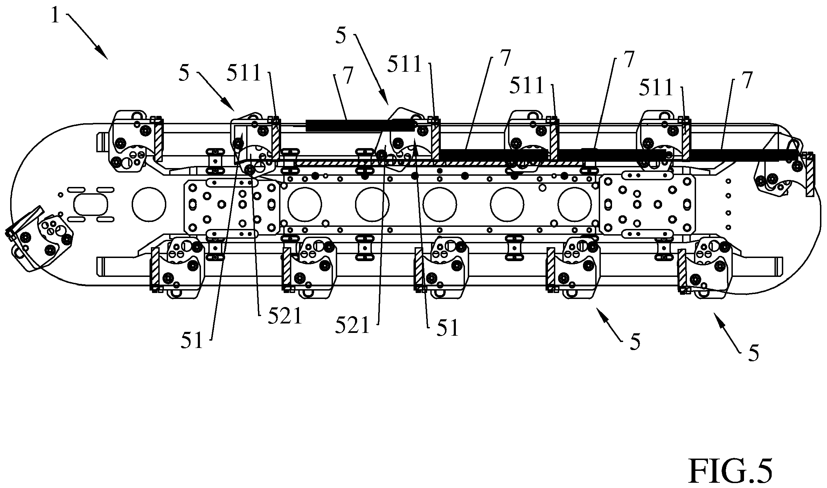

Operatively, a dose of long pasta 7 falls from a dosing machine (not shown) into a compartment of the feeder 1 comprised between two blades 511 of two consecutive carriers 5, that is between a rear blade 511 and a front blade 511 (Figure 5).

The rear blade 511 pushes the dose of long pasta 7 along a plane 9 of the feeder 1.

After a defined straight sliding section in the conveying direction of the dose of long pasta 7, the distance between the consecutive blades 511, defining the compartment in which the dose of long pasta 7 is dragged, decreases, thus realizing a compacting of the dose of long pasta 7.

Once the compacting has been completed, said consecutive blades 511 move away again.

The distance between two consecutive blades 511 varies due to the different path of the rollers 513, 514 and 522 in the tracks 41-43.

Observing Figure 4 carefully, it may be noticed that in an upper portion 44 of the cam assembly 4, where the dose of long pasta 7 falls, the tracks 41, 42 are straight, while the track 43, the innermost one, follows a varying trajectory, with straight sections interspersed with diagonal sections.

Straight section means a section in the sliding direction of the long pasta 7.

In Figure 4, the carriers 5 rotate clockwise, i.e., in the upper portion 44 they move from left to right.

Starting from the left end of the upper portion 44 of the cam assembly 4, in a first straight section 430, the track 43 runs parallel to the tracks 41, 42, at a defined distance from the adjacent track 42, intermediate between the tracks 41 and 43.

In a second section of the upper portion 44, towards the center of the upper portion 44, the track 43 approaches the track 42 along a first diagonal section 431.

At the end of said first diagonal section 431, the track 43 runs again parallel to the track 42 by traveling a second straight section 432, parallel to the track 42 but closer thereto with respect to the first straight section 430.

Subsequently, the track 43 moves away again from the track 42 by traveling a second diagonal section 433 up to a third straight section 434 parallel to the track 42 but further away therefrom with respect to the first straight section 430.

At the end of the third straight section 434, the track 43 approaches the track 42 along a third diagonal section 435, returning substantially at the same distance as the first straight section 430.

At the end of the upper portion 44, the tracks 41-43 run along a first curved section 440, then returning parallel and straight, thus allowing the carriers 5 to return towards the first straight section 430 of the upper portion 44 by means of a second curved section 441.

The approaching of the rear blade 511 to the front blade 511 occurs when the roller 522 of the control means 52 of the rear blade 511 travels the first diagonal section 431 while the roller 522 of the control means of the front blade 511 travels the second diagonal section 433.

The approaching of the tracks 42 and 43 causes a clockwise rotation of the plate 521 of the carrier 5 carrying the rear blade 511 which acts as a lever pushing forward the respective pusher 51 thanks to the sliding of the fourth roller 515 in the guide seat 523 of the plate 521.

The continuity of advancement of the carriers 5 is ensured by the fact that the plates 521 may rotate with respect to the attachments 61 of the chain 6.

After the dose of long pasta 7 has been compacted, the front blade 511 moves away from the rear blade 511, which pushes the long pasta 7, since the roller 522 of the relative control means 52 travels the second diagonal section 433, thus dragging the relative front blade 511 forward (with respect to the rear blade 511). The plate 521 of the carrier 5 carrying the front blade 511 rotates in an anti-clockwise direction.

The dose of long pasta 7, now compact, is pushed by the rear blade 511 out of the feeder 1 towards a packaging machine (not shown).

Control means 52 means a device adapted to allow the compacting of the dose of long pasta by inducing the approaching of two consecutive pushers 51.

Advantageously, with a single motor 3 it is possible to both push the dose of long pasta 7 out of the feeder 1 and compact the dose of long pasta 7 while it is still in the feeder 1.

The trajectory of the third track 43 may vary, i.e., the arrangement and length of the straight sections 430, 432, 434 and of the diagonal sections 431, 433, 435 change according to the needs, in particular according to the length of the long pasta 7, to where the dose of long pasta 7 falls, to the length of the feeder 7, to productivity... etc.

However, it is essential that the distance between the third track 43 and the second track 42 is variable and that control means 52 are provided adapted to accommodate said variable distance to modify the distance between two consecutive pushers 51.

The tracks 41, 42 allow the straight motion of the pushers 51, while the third track 43 allows the rotation of the plates 521.

The feeder 1 is compact, made up of easily assembled and replaceable components, and adapts to different dosing machines.

Advantageously, compacting is performed by the same pushers 51 that transport the long pasta 7 towards the packaging machine.

The compacting motion of the pushers 51 is straight and aligned with the conveying motion of the same pushers 51.

No particular synchronisms are required; a definite design of the cam assembly 4 in relation to the carriers 5 is sufficient.

The transmission means may vary, for example with a belt instead of a chain, with rotors of various shapes.

## Claims

1. Blade feeder (1) suitable for transporting and compacting doses of long pasta (7) in a packaging machine after dosing performed by a dosing machine (7) of long pasta (7) which is placed after a production line of long pasta (7), following a conveyor adapted to direct the long pasta (7) inside the dosing machine, to be dosed and discharged into the feeder (1),
wherein the feeder (1) comprises a frame (2), a motor (3), a plurality of carriers (5) adapted to slide along at least one track (41-43) of the feeder (1) adapted to draw a closed path, and transmission means (6, 8, 61) driven by the motor (3) and adapted to move the carriers (5),
wherein each carrier (5) comprises a pusher (51) having a blade (511) adapted to push a dose of long pasta (7),
**characterized in that** it further comprises
a cam assembly (4) which includes at least a first track (41), a second track (42) and a third track (43),
wherein each carrier (5) further comprises control means (52) movable with respect to the pusher (51) which further comprises a plate (512) integral with the blade (511), a first roller (513), a second roller (514) and a fourth roller (515), wherein the rollers (513-515) are rotatably fixed to the plate (512), wherein the first roller (513) is adapted to slide in the first track (41) while the second roller (514 ) is adapted to slide in the second track (42),
wherein the control means (52) comprise a plate (521) and a third roller (522) rotatably fixed to the plate (521), wherein the third roller (522) is adapted to slide in the third track (43),
wherein the plate (521) of the control means (52) comprises a guide seat (523) along which the fourth roller (515) of the pusher (51) is adapted to slide,
consecutive carriers (5) being at variable distance during the transport of doses of long pasta (7) and identifying a rear blade (511) and a front blade (511) between which a dose of long pasta (7) can be housed,
the compacting of the doses of long pasta (7), namely the approaching of the rear blade (511) to the front blade (511), taking place following the approaching of the second track (42) and the third track (43) which causes a clockwise rotation of the plate (521) of the carrier (5) carrying the rear blade (511) which acts as a lever pushing forward the respective pusher (51) thanks to the sliding of the fourth roller (515) in the guide seat (523) of the plate (521),
the moving away of the front blade (511) from the rear blade (511) taking place vice versa following the moving away of the second track (42) and the third track (43) which causes an anti-clockwise rotation of the plate (521) of the carrier (5) carrying the front blade (511).

2. Blade feeder (1) according to claim 1, **characterized in that** the cam assembly (4) comprises an upper portion (44) in which the second track (42) is comprised between the first track (41) and the third track (43), and in which the first track (41) and the second track (42) are straight in the conveying direction of the doses of long pasta (7), while the third track (43) follows a varying trajectory thus varying the distance from the second track (42).

3. Blade feeder (1) according to claim 2, **characterized in that** the third track (43) comprises straight sections (430, 432, 434) parallel to the first track (41) and the second track (42), interspersed with diagonal sections (431, 433, 435).

4. Blade feeder (1) according to claim 3, **characterized in that**, following the sliding direction of the carriers (5) in the upper portion (44) of the cam assembly (4), the third track (43) comprises in the order:
a first straight section (430) at a defined distance from the adjacent second track (42),
a first diagonal section (431) in which the third track (43) approaches the second track (42),
a second straight section (432) closer to the second track (42) than the distance of the first straight section (430),
a second diagonal section (433) in which the third track (43) moves away from the second track (42) again,
a third straight section (434) farther from the second track (42) than the first straight section (430),
a third diagonal section (435) in which the third track (43) approaches the second track (42) again.

5. Blade feeder (1) according to any one of the preceding claims, **characterized in that** the transmission means comprise a chain (6) driven by rotors (8) and driven by the motor (3), wherein the chain (6) comprises attachments (61) rotatably fixed to respective plates (521) of the control means (52).
